# EUROPEAN PATENT SPECIFICATION

(11) **EP 3 761 829 B1**
(45) Date of publication and mention of the grant of the patent: **17.07.2024**
(21) Application number: 18909083.0
(22) Date of filing: 05.03.2018
(51) Int. Cl.: A45D 40/00, A45D 40/26, A45D 34/04, B65D 83/00, B05B 11/00, A45D 19/00, A45D 19/02

(54) **POWDER DISPENSER WITH DIP TUBE**
PULVERSPENDER MIT TAUCHROHR
DISTRIBUTEUR DE POUDRE DOTÉ D'UN TUBE PLONGEUR

(43) Date of publication of application: 13.01.2021
(73) Proprietor: L'OREAL, 75008 Paris (FR); Kim, Jinseok, Shanghai 201206 (CN)
(72) Inventor: KIM, Jinseok, Pudong, Shanghai 201206 (CN); JACQUART, Vincent, 92110 Clichy (FR); HERMANS, Sylvaine, 201206 Shanghai (CN); LEROUX, Stéphane, 92110 Clichy (FR)
(74) Representative: Casalonga
(86) International application number: PCT/CN2018/078050
(87) International publication number: WO 2019/169535

(56) References cited:
- EP-A1- 1 493 493
- WO-A1-01/89984
- CN-A- 1 930 052
- FR-A1- 2 773 537
- US-A- 1 980 061
- US-A- 4 390 298
- US-A1- 2007 025 802

## Description

### Field of the invention

The present invention relates to a cosmetic dispenser, and more specifically, to devices for dispensing a cosmetic product. The invention also relates to a cosmetic process using said dispenser.

The cosmetic product is preferably a solid product, such as a powder or granular but it can also be a liquid, a cream, an emulsion, a gel or a foam. The cosmetic product is for example a skin cleaning or cleansing product, a coloring product for the hair, the eyelids, the lips or the skin of the face.

For example, it can be a shimmer powder product or a make-up highlighter, either for the face as the eyelid or the cheekbone or for the shoulder.

More generally, a *"cosmetic product"* is a product defined in Regulation EC 1223/2009 of the European Parliament and of the Council, dated 30 November 2009, on cosmetic products.

### Background of the invention

In the cosmetics field in particular, a good number of hair products, particularly shampoos, are packaged in containers having deformable walls, the neck of which is closed off by a wall pierced at its center by one or more small holes for expulsion of the product. In order to dispense the product, the container is turned upside down. Pressure exerted on the deformable walls of the container allows the product to be forced out through the hole or holes. The product is collected in the user's palm and applied to his or her hair. However, this simple operation does not allow the product dispensed to be dosed.

US6241129 discloses a dosing head including a dosing chamber, inside which a piston is slidably fitted, a first surface of which is in communication with the interior of a container and a second surface of which is in communication with the dosing chamber. The piston is coupled to a closure member forming at least one passage between the said closure member and an outlet for allowing a dose of the product to be expelled. This dosing head is more adapted to fluid products.

US5029736 discloses a measuring cap, which is adapted for mounting on a container opening to supply powders and the like therefrom. The measuring cap includes a cup-like body including a measuring section, and a secondary cap body including a top wall defining an outlet passage. In this manner, upon inversion of the container, a portion of its contents can enter the measuring section. This dosing cap can be expensive to manufacture.

US4424921 describes a dispensing apparatus which includes a cylindrical container having at least one annular channel in its side wall, a measuring funnel, a tubing rigidly connected between a centrally located hole in the cover for said container and the outlet of the funnel and a plurality of holes included in the funnel. A material placed in the container above the funnel partly flows through the holes to form a volume of material between the plane of the holes and the bottom of the container. This dispensing apparatus has a complexity such that its cost is inconsistent with the economic requirements of certain distribution channels, in particular the mass market. WO 01/89984 discloses also a dispenser with a concave bottom wall.

There is a need to benefit from a dispenser can be deliver the right amount of dosage at each time.

There is a need to benefit from a dispenser that enables the consumer to control the dosage.

There is also a need for a new gesture for dispensing a cosmetic product.

There is also a need for providing a dispenser that can be used for the dosage of any product, such as liquid but especially powder.

There is also a need for providing a dispenser simple and cheap to manufacture.

### Object and summary of the invention

The invention aims to meet some or all of these needs and relates, according to one of its aspects, to a cosmetic dispenser according to claim 1.

Thanks to the position and structure of the opening, any kind of products, including solids, can be dispensed. The manufacturing of the dispenser is simple and cheap, as it comprises a few main pieces. Moreover, the dosage can be accurate.

With this dispenser, the consumer finds a new easy way to dispense solid, especially make-up or care powder.

The invention also relates to a cosmetic process comprising the operations consisting of:
- Providing a cosmetic dispenser as described above,
- Tilting the dispenser from an initial position to a use position,
- Letting the product come out of the dispenser,
- Tilting back the dispenser from the use position to the vertical position.

### Main definition

The expression *"longitudinal axis of the part x"* denotes the line connecting all of the centers of mass of the cross sections of the part x.

A *"transversal cross-section"* is a cross section perpendicular to the longitudinal axis X of the applicator.

An *"envelope surface of a device"* is the surface that relies on the external surface of the device.

Preferably, the dispenser according to the invention is made of rigid plastic, notably PP, LDPE, HDPE, TPE and TPU.

### Preferred embodiments

- The dip tube is devoid of axial symmetry with respect to the longitudinal X axis. The product easier engages into the dip tube.
- The dip tube includes a unique plane of symmetry containing the longitudinal axis X, the plane of symmetry being a median plane of symmetry. The dispenser is easier to control by the user.
- The aperture is of elongated shape along the longitudinal axis X.
- This structure is better suited to solid products.
- In a plane perpendicular to the longitudinal X axis, the aperture has a cross section that is less or equal to than the half of the maximal cross section of the dip tube. The speed of the product is better adapted to cosmetic use.
- The dip tube is integrally formed with the receptacle. The manufacturing process is cheaper.
- The aperture of the dip tube into the receptacle is located above a product level when the dispenser is inverted. The displacement of the product is facilitated.
- The product is a solid product, notably a powder, granules, capsules, tablets or flakes. On first embodiment, the solid product is a make-up product, notably comprising a pigment, optionally having optical effect. On a second embodiment, the solid product comprises particles for cleaning or cleansing, such as abrasive particles, soap balls or soap balls.
- As illustrative examples of pigments usable in the present invention, carbon black may be mentioned titanium oxide, chromium oxide, type of the D & C pigments, FD & C and lacquers.

### Brief description of the drawings

The invention can be better understood on reading the following description of non-limiting embodiments thereof, and on examining the accompanying drawings, schematic and partial, in which:
- figure 1 is perspective view of a cosmetic dispenser according to the invention, cap closed,
- figure 2 is a longitudinal cut of the dispenser of figure 1, without bottom, cap open,
- figure 3 is a longitudinal cut of the dispenser of figure 2 showing the position of the powder,
- figure 4 is perspective view of the bottom of the dispenser of figure 1,
- figure 5 is a perspective view of the funnel of figure 1,
- figure 6 is a longitudinal cut of the body of the dispenser of figure 3, cap open,
- figure 7 is a perspective view of a longitudinal cut of the lower part of the dispenser, showing a dose of powder,
- figure 8 is a perspective inclined longitudinal view of the dispenser of figure 2 without cap, showing the path of a dose of powder,
- figure 9 is an enlarged view of detail A of figure 8,
- figure 10 is a perspective inclined longitudinal view of the dispenser of figure 1, cap open, showing the content of powder and an ejection of a dose.
- figure 11 is a perspective view of a longitudinal cut of the dispenser.

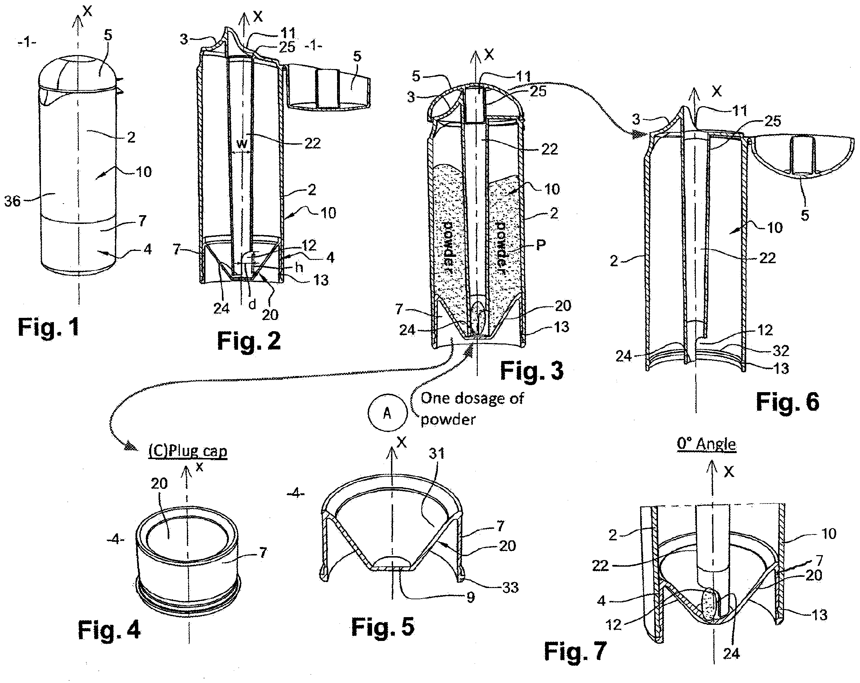

FIG. 1 shows a cosmetic dispenser 1 of the invention having a longitudinal axis X, comprising a receptacle 10 and a bottom 4. The receptacle has a body 36 made of a tubular wall 2 about the longitudinal axis X and a top end wall 3.

The receptacle 10 is a reservoir for a product, notably a solid product. Optionally, the dispenser 1 comprises a cap 5 for protecting the product at the time of storage.

Fig. 2 shows a dip tube 22 integrally formed with the receptacle 10. The top end 25 of the dip tube 22 is attached to the top end wall 3 and defines the opening 11 of the dispenser. The dip tube 22 could also be a separate attachment, for example it could be fixed to an end piece integrally formed with the top end wall 3 of the receptacle 10. The lower end 24 of the dip tube 22 is located substantially at the bottom 4.

The bottom 4 is fixed at the bottom end 13 of the receptacle 10. The attachment might be achieved by tightening, sleeve-fitting, snap-fitting, screwing, bonding, welding or other. As a variant not according to the invention, they may be made in a single piece together. The bottom 4 comprises a bottom wall 20 concave towards the opening 11 and a lateral cylindrical wall 7.

The receptacle 2, the dip tube 22 and the bottom end 4 can be made of thermoplastic materials, notably produced from PP, HDPE, LDPE, TPE, TP. They can be made by injection molding in one piece.

The lower end 24 of the dip tube 22 comes into abutment with the bottom wall 20. It is cut to define an aperture 12 for the inlet of the product P into the dip tube 22. The envelop surface of the aperture 12 may have a profile comprising a plane, convex or concave surface towards the longitudinal axis X. The cut portion may be defined as a missing portion of the dip tube 22 with respect to a cylindrical profile.

Preferably, in a transversal cross section perpendicular to the X axis, the aperture 12 extends over an aperture's width d that is less than or equal to half the maximal width w of the dip tube 22, a cross section of the dip tube 22 in a plane intersecting the opening 12 being non-circular. The dispenser 1 is safer and the product can flow more easily.

The shape of the dip tube 22 at its lower end 24 can be a bevel or a double bevel. The manufacturing is simple.

In a particular embodiment, the dip tube 22 can be formed as a descending truncated cylinder of longitudinal axis X having the aperture 12 at the truncation.

The aperture 12 preferably extends along the X axis over a high h that is greater or equal to the aperture's width d, measured perpendicular to the X axis, and more preferably that is greater or equal to twice the aperture's width d. These dimensions avoid plugging at the entrance of the dip tube 22.

The maximal transversal cross section of the dip tube perpendicular to the X axis can be of any shape, such as circular, polygonal, more particularly triangular, square, pentagonal or hexagonal, oblong.

Preferably, the aperture's width d is between 3 mm and 1,5 cm, and preferably between 5 mm and 1 cm.

Preferably, the aperture's high h is between 8 mm and 2,5 cm, and preferably between 1,2 mm and 1,7 cm.

The shape of the aperture 12 can be of any kind, as long as it let the product flow into the dip tube 22.
Fig. 3 shows the dip tube 22 extending from the opening 11 of the receptacle 10 to the bottom wall 20, with the lower end 24 immersed in the solid product P.
Fig.4 shows the bottom wall 20 defining an interior space for receiving the dip tube 22 and the product. Optionally, the bottom wall 20 can carry an end piece on its inside face 8 for engaging and securing the dip tube 22.
Fig. 5 depicts a bottom wall 20 including a plane surface 9 and an inclined surface 31. The lower end 24 of the dip tube 22 comes to rest on the plane surface 9. The product is located on a chamber between the dip tube 22 and the inclined surface 31.
Fig. 6 depicts the receptacle 10 provided at its bottom end 13 with latching means 32 cooperating with complementary locking means 33 formed on the bottom 4.
Fig. 7 depicts product at the entrance of the aperture 12 before flowing along the longitudinal X axis through the dip tube 22 when the dispenser 1 is reversed head down by the user.

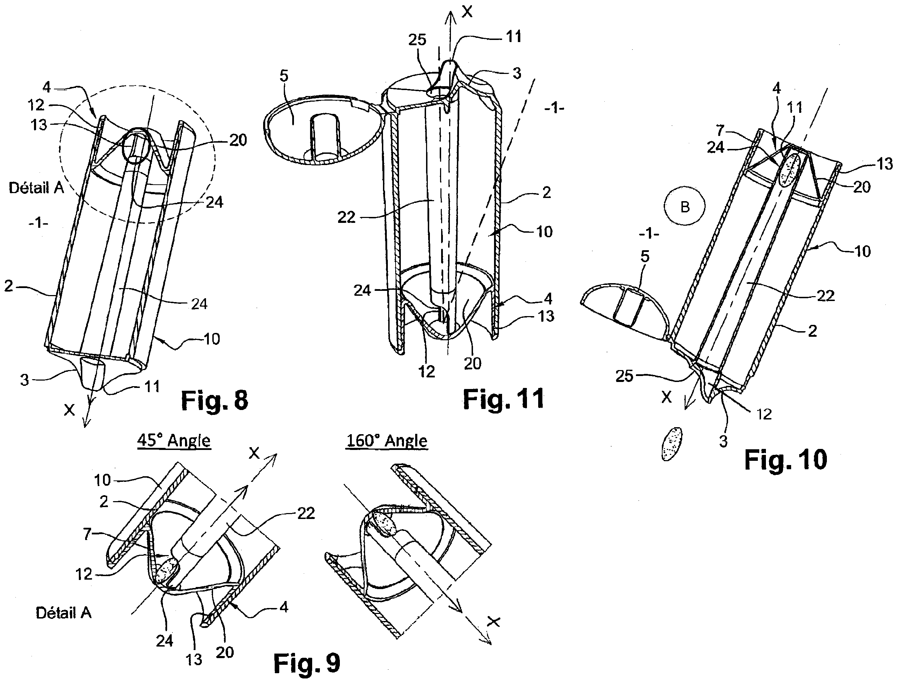

Fig. 8 depicts the product moving through the dip tube 22 as the dispenser is fast totally reversed.
Fig. 9 depicts an intermediate position of the device between the head up position illustrated Fig. 7 and Fig. 11 and the head down position of Fig. 8. Fig. 7 and Fig. 8.

Obviously, numerous modifications and variations of the present invention are possible in light of the above teachings within the scope of the appended claims.

## Claims

1. Cosmetic dispenser (1) having a longitudinal axis X, comprising:
(i) a receptacle (10) including in an upper part, an opening (11) for the outlet of a product from the dispenser (1) and in a lower part, a bottom wall (20) concave towards the opening (11), the receptacle (10) containing the product,
(ii) a dip tube (22) connected at an upper end, to the opening (11) and plunging towards the bottom wall (20), wherein the receptacle (10) further comprises a bottom (4) attached to a body (36) of the receptacle (10), in particular by snapping, the bottom (4) comprising the bottom wall (20) concave towards the opening (11) and a lateral cylindrical wall (7) and in that a lower end (24) of the dip tube (22) comes to bear against the bottom wall (20) of the receptacle (10) and defines, together with the bottom wall (20), an aperture (12) for the outlet of the product from the receptacle (10) towards the dip tube (22).

2. Cosmetic dispenser according to claim 1, **characterized in that** the dip tube (22) is devoid of axial symmetry with respect to the longitudinal X axis.

3. Cosmetic dispenser according to claim 1, **characterized in that** the dip tube (22) includes a unique plane of symmetry containing the longitudinal axis X, the plane of symmetry being a median plane of symmetry.

4. Cosmetic dispenser according to any of the preceding claims, **characterized in that** the aperture (12) is of elongated shape along the longitudinal axis (X).

5. Cosmetic dispenser according to any of the preceding claims, **characterized in that**, in a plane perpendicular to the longitudinal X axis, the aperture (12) has a cross section that is less or equal to than the half of the maximal cross section of the dip tube (22).

6. Cosmetic dispenser according to any of the preceding claims, **characterized in that** the dip tube (22) is integrally formed with the receptacle (10).

7. Cosmetic dispenser according to any of the preceding claims, **characterized in that** the aperture (12) of the dip tube (22) into the receptacle (10) is located above a product level when the dispenser (1) is inverted.

8. Cosmetic dispenser according to any of the preceding claims, **characterized in that** the product is a solid product, notably a powder, granules, capsules, tablets or flakes.

9. Cosmetic process comprising the operations consisting of:
- Providing a cosmetic dispenser (1) according to any of the preceding claims,
- Tilting (1) the dispenser from an initial position to a use position,
- Letting the product come out of the dispenser (1),
- Tilting back the dispenser (1) from the use position to the vertical position.

## Patentansprüche

1. Kosmetischer Spender (1) mit einer Längsachse X, Folgendes umfassend:
(i) einen Behälter (10), der in einem oberen Teil eine Öffnung (11) für die Ausgabe eines Produkts aus dem Spender (1) und in einem unteren Teil eine Bodenwand (20), die hin zu der Öffnung (11) konkav ist, umfasst, wobei der Behälter (10) das Produkt enthält,
(ii) ein Tauchrohr (22), das an einem oberen Ende mit der Öffnung (11) verbunden ist und hin zu der Bodenwand (20) abtaucht,
wobei der Behälter (10) ferner einen Boden (4) umfasst, der - insbesondere durch Verrasten - an einem Körper (36) des Behälters (10) angebracht ist, wobei der Boden (4) die Bodenwand (20), die hin zu der Öffnung (11) konkav ist, und eine seitliche zylindrische Wand (7) umfasst, und wobei ein unteres Ende (24) des Tauchrohrs (22) an der Bodenwand (20) des Behälters (10) anliegt und zusammen mit der Bodenwand (20) einen Durchlass (12) für die Ausgabe des Produkts aus dem Behälter (10) hin zu dem Tauchrohr (22) definiert.

2. Kosmetischer Spender nach Anspruch 1, **dadurch gekennzeichnet, dass** das Tauchrohr (22) keine axiale Symmetrie in Bezug auf die Längsachse X aufweist.

3. Kosmetischer Spender nach Anspruch 1, **dadurch gekennzeichnet, dass** das Tauchrohr (22) eine einzige die Längsachse X enthaltende Symmetrieebene umfasst, wobei die Symmetrieebene eine mittlere Symmetrieebene ist.

4. Kosmetischer Spender nach einem der vorhergehenden Ansprüche, **dadurch gekennzeichnet, dass** der Durchlass (12) eine lang gestreckte Form entlang der Längsachse (X) aufweist.

5. Kosmetischer Spender nach einem der vorhergehenden Ansprüche, **dadurch gekennzeichnet, dass** in einer Ebene, die senkrecht zu der Längsachse X ist, der Durchlass (12) einen Querschnitt aufweist, der kleiner als die oder gleich der Hälfte des maximalen Querschnitts des Tauchrohrs (22) ist.

6. Kosmetischer Spender nach einem der vorhergehenden Ansprüche, **dadurch gekennzeichnet, dass** das Tauchrohr (22) einstückig mit dem Behälter (10) ausgebildet ist.

7. Kosmetischer Spender nach einem der vorhergehenden Ansprüche, **dadurch gekennzeichnet, dass** der Durchlass (12) des Tauchrohrs (22) in den Behälter (10) hinein sich oberhalb einer Produkthöhe befindet, wenn der Spender (1) umgedreht ist.

8. Kosmetischer Spender nach einem der vorhergehenden Ansprüche, **dadurch gekennzeichnet, dass** das Produkt ein festes Produkt ist, insbesondere ein Puder, ein Granulat, Kapseln, Tabletten oder Flocken.

9. Kosmetischer Prozess, der die aus Folgendem bestehenden Vorgänge umfasst:
- Bereitstellen eines kosmetischen Spenders (1) nach einem der vorhergehenden Ansprüche,
- Kippen (1) des Spenders aus einer Ausgangsstellung in eine Benutzungsstellung,
- Herauskommenlassen des Produkts aus dem Spender (1),
- Zurückkippen des Spenders (1) aus der Benutzungsstellung in die vertikale Stellung.

## Revendications

1. Distributeur (1) de produit cosmétique possédant un axe longitudinal X, comprenant :
(i) un réservoir (10) comportant, dans une partie supérieure, une ouverture (11) pour la sortie d'un produit depuis le distributeur (1) et, dans une partie inférieure, une paroi de fond (20) concave vers l'ouverture (11), le réservoir (10) contenant le produit,
(ii) un tube plongeur (22) relié, au niveau d'une extrémité supérieure, à l'ouverture (11) et plongeant vers la paroi de fond (20),
dans lequel le réservoir (10) comprend en outre un fond (4) fixé à un corps (36) du réservoir (10), en particulier par encliquetage, le fond (4) comprenant la paroi de fond (20) concave vers l'ouverture (11) et une paroi cylindrique latérale (7) et dans lequel une extrémité inférieure (24) du tube plongeur (22) vient reposer contre la paroi de fond (20) du réservoir (10) et définit, conjointement avec la paroi de fond (20), un orifice (12) pour la sortie du produit depuis le réservoir (10) vers le tube plongeur (22) .

2. Distributeur de produit cosmétique selon la revendication 1, **caractérisé en ce que** le tube plongeur (22) est dépourvu de symétrie axiale par rapport à l'axe longitudinal X.

3. Distributeur de produit cosmétique selon la revendication 1, **caractérisé en ce que** le tube plongeur (22) comporte un plan de symétrie unique contenant l'axe longitudinal X, le plan de symétrie étant un plan médian de symétrie.

4. Distributeur de produit cosmétique selon l'une quelconque des revendications précédentes, **caractérisé en ce que** l'orifice (12) est de forme allongée le long de l'axe longitudinal X.

5. Distributeur de produit cosmétique selon l'une quelconque des revendications précédentes, **caractérisé en ce que**, dans un plan perpendiculaire à l'axe longitudinal X, l'orifice (12) présente une section transversale qui est inférieure ou égale à la moitié de la section transversale maximale du tube plongeur (22).

6. Distributeur de produit cosmétique selon l'une quelconque des revendications précédentes, **caractérisé en ce que** le tube plongeur (22) fait partie intégrante du réservoir (10).

7. Distributeur de produit cosmétique selon l'une quelconque des revendications précédentes, **caractérisé en ce que** l'orifice (12) du tube plongeur (22) dans le réservoir (10) est situé au-dessus d'un niveau de produit lorsque le distributeur (1) est inversé.

8. Distributeur de produit cosmétique selon l'une quelconque des revendications précédentes, **caractérisé en ce que** le produit est un produit solide, notamment une poudre, des granulés, des capsules, des comprimés ou des paillettes.

9. Procédé cosmétique comprenant les opérations consistant à :
- fournir un distributeur (1) de produit cosmétique selon l'une quelconque des revendications précédentes,
- incliner (1) le distributeur depuis une position initiale vers une position d'utilisation,
- laisser sortir le produit du distributeur (1),
- incliner le distributeur (1) depuis la position d'utilisation vers la position verticale.
